# EUROPÄISCHE PATENTSCHRIFT

(11) **EP 3 612 748 B1**
(45) Veröffentlichungstag und Bekanntmachung des Hinweises auf die Patenterteilung: **02.08.2023**
(21) Anmeldenummer: 18725481.8
(22) Anmeldetag: 16.05.2018
(51) Int. Cl.: F16F 1/18, B60G 11/04, B60G 11/02, F16F 1/368

(54) **FEDERBLATT FÜR EINE BLATTFEDER**
SPRING BLADE FOR A LEAF SPRING
LAME RESSORT POUR UN RESSORT À LAME

(30) Priorität: 23.06.2017 AT 505222017
(43) Veröffentlichungstag der Anmeldung: 26.02.2020
(73) Patentinhaber: Hendrickson Commercial Vehicle Systems Europe GmbH, 8750 Judenburg (AT)
(72) Erfinder: ZAMBERGER, Joerg, 8753 Fohnsdorf (AT); NATTLAND, Friedhelm, 41564 Kaarst (DE)
(74) Vertreter: Beer & Partner Patentanwälte KG
(86) Internationale Anmeldenummer: PCT/EP2018/062701
(87) Internationale Veröffentlichungsnummer: WO 2018/233944

(56) Entgegenhaltungen:
- EP-A1- 1 980 425
- EP-A2- 1 138 432
- WO-A1-01/53779
- WO-A1-2014/109943
- DE-A1- 10 260 062
- DE-A1-102010 041 408
- JP-A- S5 837 332
- JP-A- H01 182 105
- US-A- 4 575 057

## Beschreibung

Die Erfindung betrifft ein Federblatt für eine Blattfeder, wobei das Federblatt eine Oberseite, eine Unterseite, zwei zwischen der Oberseite und der Unterseite verlaufende Seitenabschnitte, eine Längsachse, eine normal zur Oberseite und Unterseite und durch die Längsachse verlaufende Schnittebene, zwei Endabschnitte und einen sich zwischen den Endabschnitten erstreckenden Mittelabschnitt aufweist, wobei der Mittelabschnitt einen Klemmbereich aufweist und wobei zwischen wenigstens einem der Endabschnitte und dem Klemmbereich ein Hauptspannungsbereich vorgesehen ist, dessen Stärke in Richtung vom Klemmbereich zum Endabschnitt parabolisch abnimmt.

Zudem betrifft die Erfindung eine Blattfeder für eine Radaufhängung.

Ein gattungsgemäßes Federblatt ist aus der WO 01/53779 A1 bekannt.

Solche Federblätter bzw. Blattfedern werden insbesondere für Nutzfahrzeuge, wie LKWs, verwendet. Bei diesem Einsatzgebiet besteht ein besonderes Verlangen danach, dass die Blattfeder in belastetem Zustand im Hauptspannungsbereich eine im Wesentlichen konstante Spannungsverteilung aufweist. Um im Hauptspannungsbereich eine im Wesentlichen konstante Spannungsverteilung zu erzielen, ist es bekannt, dass die Federblätter in diesem Bereich eine im Wesentlichen konstante Breite, die der Breite des Federblattes im Klemmbereich entspricht, aufweisen, wobei die Stärke vom Klemmbereich bis zum Endabschnitt parabolisch abnimmt. Die parabolische Abnahme der Stärke des Hauptspannungsabschnittes zum Endabschnitt hin hat sich für eine konstante Spannungsverteilung als wesentlich etabliert.

Nachteilig dabei ist jedoch, dass eine konstante Breite, die der Breite des Federblattes im Klemmbereich entspricht, dazu führt, dass die Blattfeder ein relativ hohes Gewicht aufweist. Die Einsparung von Gewicht stellt jedoch aus praktischer Sicht ebenfalls ein besonderes Verlangen dar.

Bei der Erzeugung von Blattfedern spielt das Gewicht des fertigen Produktes eine entscheidende wirtschaftliche Rolle. Ein Vorteil der Verwendung möglichst leichter Blattfedern im Fahrzeugbau ist die Gewichtsreduktion des gesamten Kraftfahrzeuges, was dazu führt, dass mehr Transportgut unter Einhaltung des zulässigen Maximalgewichtes geladen werden kann. Oft sind LKWs jedoch nicht mit dem maximal möglichen Transportgewicht beladen bzw. die LKWs fahren zum Teil auch unbeladen, wobei der Vorteil einer möglichst leichten Blattfeder darin liegt, dass der Kraftstoffverbrauch gesenkt werden kann. Wenn die ungefederten Massen bei einem Fahrzeug reduziert werden, besteht ein Vorteil zudem darin, dass die Fahrsicherheit erhöht wird. Der größte Vorteil jedoch liegt in der Ersparnis des Materialeinsatzes während des Herstellungsprozesses und der damit einhergehenden Kostenreduktion des fertigen Produktes.

Um Material und somit auch Gewicht einzusparen, ist es bekannt, die Breite des Hauptspannungsbereiches eines Federblattes einer Blattfeder vom Klemmbereich zum Endabschnitt zu verringern. Durch diese konstruktive Maßnahme ist eine Materialersparnis möglich, ohne jedoch die Festigkeit und Einsatzfähigkeit der Blattfeder wesentlich zu verringern. Zudem kann das Erfordernis bestehen, dass im Bereich der Radaufhängung Bauraum geschaffen werden soll, um weitere Elemente anordnen zu können, weshalb eine konstruktiv vorgegebene Breite des Endabschnittes realisiert werden muss, um beispielsweise einen unerwünschten Kontakt der Blattfeder mit Anbindungsteilen einer Radaufhängung oder anderen Fahrzeugteilen zu vermeiden.

Problematisch bei der Verringerung der Breite des Hauptspannungsbereiches eines Federblattes einer Blattfeder ist jedoch, dass sich dies auf die Spannungsverteilung im Hauptspannungsbereich auswirkt.

Aus der WO 2014/109943 A1 sind verschiedene Ausführungsformen einer Blattfeder bekannt, die zwischen einem Klemmbereich und einem Endabschnitt ausgehend vom Klemmbereich zuerst einen Übergangsbereich und anschließend einen Bereich mit parabolisch abnehmender Stärke aufweisen. Im Übergangsbereich nimmt die Stärke ausgehend vom Klemmbereich linear ab, wobei die Breite - je nach Ausführungsform - ebenfalls linear abnimmt, gleichbleibt oder linear zunimmt. Im Bereich mit parabolisch abnehmender Stärke nimmt die Breite zum Endabschnitt hin linear ab.

Aus der EP 1 980 425 A1 ist eine Blattfeder bekannt, bei der die Breite des Hauptspannungsbereiches bei gleichbleibender Stärke linear abnimmt und im Anschluss daran die Stärke bei gleichbleibender Breite parabolisch abnimmt.

Aus der EP 1 138 432 A2 ist eine Blattfeder bekannt, bei der die Breite und die Stärke des Hauptspannungsbereiches abnehmen und im Anschluss daran die Stärke bei gleichbleibender Breite abnimmt.

Es hat sich gezeigt, dass sich die lineare Abnahme der Breite negativ auf die Spannungsverteilung auswirkt, da dann die Spannung in Richtung zum Endabschnitt hin stark zunimmt. Negative Auswirkungen treten auch bei konstanter Breite des Hauptspannungsabschnittes im Bereich der abnehmenden Stärke auf, sofern die Breite gegenüber der Breite des Klemmbereiches reduziert ist.

Zudem ist aus der EP 1 138 432 A2 eine Blattfeder bekannt, bei der die Breite des Hauptspannungsbereiches bei gleichbleibender Stärke über die Länge des Hauptspannungsabschnittes abnimmt. Diese Ausführungsform weist durch den Stärkeverlauf eine variierende Spannungsverteilung auf, wobei sich die Abnahme der Breite über die Länge des Hauptspannungsabschnittes negativ auf die Torsionssteifigkeit auswirkt.

Der Erfindung liegt die Aufgabe zu Grunde, ein Federblatt für eine Blattfeder zur Verfügung zu stellen, mit dem Material und somit auch Gewicht eingespart werden kann, wobei bei einaxialer, vertikaler Belastung eine im Wesentlichen konstante Spannungsverteilung im Hauptspannungsbereich, insbesondere bei starker Belastung der Blattfeder, gewährleistet ist. Gleichzeitig sollen zusätzlicher Bauraum geschaffen und unerwünschte Kontakte des Federblattes mit Anbindungsteilen einer Radaufhängung oder anderen Fahrzeugteilen vermieden werden.

Gelöst wird diese Aufgabe erfindungsgemäß mit einem Federblatt, welches die Merkmale des Anspruches 1 aufweist.

Zudem wird diese Aufgabe mit einer Blattfeder gelöst, welche die Merkmale des Anspruches 12 aufweist.

Bevorzugte und vorteilhafte Ausführungsformen der Erfindung sind Gegenstand der Unteransprüche.

Erfindungsgemäß ist vorgesehen, dass zwischen dem Hauptspannungsbereich und dem Klemmbereich ein Übergangsbereich angeordnet ist, wobei die Stärke des Federblatts im Übergangsbereich vom Klemmbereich zum Hauptspannungsbereich bei konstanter Breite abnimmt, dass der Hauptspannungsbereich in Richtung vom Klemmbereich zum Endabschnitt einen ersten Teilbereich und einen weiteren Teilbereich aufweist, wobei die Stärke des ersten Teilbereichs bei gleichbleibender Breite abnimmt und die Stärke des weiteren Teilbereichs bei abnehmender Breite abnimmt, wobei die zwischen der Schnittebene und den Seitenabschnitten des Federblatts verlaufende Breite des weiteren Teilbereiches in Richtung vom Endabschnitt bis zum Klemmbereich gemäß einer quadratischen Funktion zunimmt, d.h. die Breite des Hauptspannungsbereiches nimmt vom Klemmbereich zum Endabschnitt entsprechend ab. Es hat sich überraschend gezeigt, dass der Hauptspannungsbereich bei abnehmender Stärke unter einaxialer, vertikaler Belastung des Federblattes eine im Wesentlichen konstante Spannungsverteilung aufweist, wenn die Breite des Hauptspannungsbereiches zumindest teilweise derart vom Klemmbereich zum Endabschnitt abnimmt. Somit können die Vorteile betreffend Gewichtsreduktion und Bauraum erzielt werden, ohne dass die Nachteile betreffend Spannungsverteilung auftreten.

Insbesondere kann vorgesehen sein, dass die zwischen der Schnittebene und den Seitenkanten des Federblatts verlaufende Breite des Hauptspannungsabschnittes gemäß einer quadratischen Funktion verläuft.

Unter Seitenkante wird im Rahmen der Erfindung auch eine abgerundete oder abgeschrägte Kante verstanden. Die Seitenkante ist im Rahmen der Erfindung der Bereich, in dem die Ober- /Unterseite des Federblatts in einen zur Unter- /Oberseite des Federblatts verlaufenden Seitenabschnitt übergeht.

In einer besonders bevorzugten Ausführungsform ist vorgesehen, dass die Seitenabschnitte und/oder die Seitenkanten des Federblatts im Hauptspannungsbereich im Wesentlichen entsprechend der Form eines Parabelarmes verlaufen. Ein solcher Verlauf, insbesondere in Kombination mit einer parabolisch abnehmenden Stärke des Hauptspannungsbereiches, ist für eine konstante Spannungsverteilung besonders günstig.

Blattfedern sind häufig an ihren Enden mit einem Federbock verbunden. Wenn die Breite des Federblattes bzw. der Blattfeder reduziert wird, kann auch die Breite des Federblockes reduziert werden, wodurch das Gesamtgewicht des Fahrzeuges, an welchem Federbock und Blattfeder angeordnet sind, weiter reduziert werden kann.

Bei einer Blattfeder wird zwischen verschiedenen Belastungszuständen unterschieden. Die zwei wichtigsten Belastungszustände sind die einaxiale, vertikale Belastung, d.h. eine Belastung in vertikaler Richtung, welche ständig auf die Blattfeder wirkt, und die Belastung der Blattfeder während eines Bremsvorganges. Als weiterer Belastungszustand kann die Belastung der Blattfeder während Kurvenfahrten genannt werden.

Im Rahmen der Erfindung wird unter einaxialer, vertikaler Belastung eine Belastung der Blattfeder außerhalb eines Bremsvorganges verstanden. Die Erfindung bezieht sich auf vorteilhafte Effekte betreffend den einaxialen, vertikalen Belastungszustand.

Mit einem erfindungsgemäßen Federblatt kann erzielt werden, dass ein Hauptspannungsbereich über seine gesamte Länge oder über einen Teil seiner Länge bei einaxialer, vertikaler Belastung eine im Wesentlichen konstante Spannungsverteilung aufweist. Dies kann am Beispiel einer Längsblattfeder als Vorderfeder näher erläutert werden:
Längsblattfeder bedeutet, dass die Längserstreckung der Blattfeder im Wesentlichen parallel zur Längserstreckung des Fahrzeuges in Fahrtrichtung gesehen verläuft. Bei einer Vorderfeder ist die Blattfeder im Klemmbereich mit der Vorderachse des Fahrzeuges verbunden. Der Bereich vor der Vorderachse wird als vorderer Bereich bezeichnet und der Bereich hinter der Vorderachse als hinterer Bereich. Bei einer Vorderfeder verformt sich die Blattfeder bei zunehmender Belastung bei einem Bremsvorgang derart, dass sie einen sogenannten S-Schlag ausübt. Dabei biegt sich die Feder im vorderen Bereich nach unten und im hinteren Bereich nach oben. Um den Ausschlag nach oben im hinteren Bereich zu begrenzen, ist dort im Regelfall ein Dämpfer am Fahrgestell angeordnet. Bei dieser Vorderfeder sind zwei Hauptspannungsbereiche dort, wo sich die Feder im vorderen Bereich nach unten und im hinteren Bereich nach oben biegt.

Die Spannungsverteilung im Hauptspannungsbereich soll bei einaxialer, vertikaler Belastung im Wesentlichen konstant sein. Graphisch dargestellt, weist die Spannungsverteilung für den Bereich zwischen dem Klemmbereich und dem Dämpfer bei einem Bremsvorgang einen nachteiligen Ausschlag nach oben auf. Um diesen Ausschlag entgegenzuwirken, wird der Hauptspannungsbereich zwischen dem Klemmbereich und dem Bereich, an dem das Federblatt bei Verformung am Dämpfer anschlägt, aufgedickt, d.h. die Stärke des Federblatts wird in diesem Bereich erhöht. Durch die Aufdickung verläuft die Spannungsverteilung in diesem Bereich bei einaxialer, vertikaler Belastung der Blattfeder graphisch dargestellt unterhalb des zu erzielenden konstanten Niveaus.

Eine erfindungsgemäße Vorderfeder weist bei einaxialer, vertikaler Belastung im gesamten Hauptspannungsbereich im vorderen Bereich eine im Wesentlichen konstante Spannungsverteilung auf. Im hinteren Bereich weist die Vorderfeder in dem Teil des Hauptspannungsbereiches, der nicht aufgedickt ist, bei einaxialer, vertikaler Belastung eine im Wesentlichen konstante Spannungsverteilung auf.

Da bei einer Hinterfeder, bei der die Blattfeder im Klemmbereich mit der Hinterachse eines Fahrzeuges verbunden ist, der beim Bremsvorgang beschriebene S-Schlag nicht auftritt, muss bei einer Hinterfeder keine Aufdickung vorgesehen sein. Der Hauptspannungsbereich bzw. die Hauptspannungsbereiche der Hinterfeder weist bzw. weisen bei einaxialer, vertikaler Belastung durchgehend eine konstante Spannungsverteilung auf.

Als Hauptspannungsbereich wird im Sinne der Erfindung ein Bereich angesehen, in welchem das Federblatt unter Belastung am stärksten beansprucht wird und sich am stärksten elastisch verformt.

Als Klemmbereich wird im Sinne der Erfindung ein Bereich des Federblattes angesehen, der in Längsrichtung der Blattfeder meist im Wesentlichen mittig angeordnet ist und vorzugsweise eine größere Stärke als die daran angrenzenden Abschnitte des Federblattes aufweist. Eine ein einzelnes oder mehrere erfindungsgemäße/s Federblatt/Federblätter aufweisende, in einem Fahrzeug eingebaute Blattfeder ist im Klemmbereich über eine Verbindungseinrichtung, insbesondere über einen oder mehrere die Blattfeder im Klemmbereich umfassende U-förmige Bolzen oder Formteile, mit einer Radachse oder einem Radachsenbolzen verbunden.

Unter Fahrgestell wird ein Fahrzeugrahmen bzw. ein Chassis eines Fahrzeuges verstanden, an welchem eine Radaufhängung angeordnet ist.

Weist eine Blattfeder mehrere Federblätter auf, so sind die Federblätter vorzugsweise wenigstens im Klemmbereich, insbesondere über einen durch ein zentrales Durchgangsloch im Klemmbereich eines jeden Federblattes geführten Bolzen, miteinander verbunden, wobei die Federblätter entweder direkt aneinander anliegen oder zwischen den Federblättern Zwischenelemente, wie z.B. Zwischenbleche, angeordnet bzw. eingeklemmt sind. Im Rahmen der Erfindung sind grundsätzlich auch Ausführungsformen ohne Durchgangsloch möglich, wobei die Federblätter dann z.B. durch Formschlusselemente miteinander verbunden sind.

In einer bevorzugten Ausführungsform des Federblattes ist zwischen dem Hauptspannungsbereich und dem Endabschnitt ein Übergangsbereich angeordnet, wobei die Stärke des Federblatts im Übergangsbereich vom Klemmbereich zum Hauptspannungsbereich und/oder im Übergangsbereich vom Hauptspannungsbereich zum Endabschnitt in Richtung zum Endabschnitt, insbesondere nichtlinear, vorzugsweise konkav, abnimmt. Solche Übergangsbereiche erleichtern die Fertigung des Federblattes und verhindern das Auftreten abrupter oder scharfer Übergänge bzw. Spannungsübergänge (Spannungssprünge) zwischen dem Klemmbereich, dem Hauptspannungsbereich und dem Endabschnitt.
Bevorzugt ist es, wenn in Richtung vom Klemmbereich zum Endabschnitt, nach dem Hauptspannungsbereich, die Breite und/oder die Stärke des daran angrenzenden Übergangsbereiches oder Endabschnittes abnimmt oder im Wesentlichen konstant bleibt. Eine Ausführungsform, bei der die Breite und/oder die Stärke des an den Hauptspannungsbereich grenzenden Übergangsbereiches oder Endabschnittes zunimmt ist im Rahmen der Erfindung jedoch auch denkbar. Durch diese konstruktive Maßnahme kann ein erfindungsgemäßes Federblatt an verschiedene Anschlussmaße angepasst werden.

Im Rahmen der Erfindung muss der Hauptspannungsbereich nicht direkt in einen Endabschnitt übergehen. Zwischen dem Hauptspannungsbereich und dem Übergangsbereich zum Endabschnitt kann das Federblatt auch einen weiteren Bereich aufweisen, der unterschiedliche Funktionen erfüllen kann.

In einer besonders bevorzugten Ausführungsform weist das Federblatt in wenigstens einem Endabschnitt die Form eines Haltemittels auf bzw. ist wenigstens ein Endabschnitt in Form eines Haltemittels geformt. Das Haltemittel ist ein Mittel zum Verbinden des Federblattes bzw. der Blattfeder mit einem Fahrgestell bzw. mit Anbindungsteilen einer Radaufhängung eines Fahrzeuges, beispielsweise ein gerolltes Federauge.

In einer vorteilhaften Ausführungsform ist im Mittelabschnitt beidseitig des Klemmbereiches jeweils ein Hauptspannungsbereich, der bei belastetem Federblatt eine im Wesentlichen konstante Spannungsverteilung aufweist, angeordnet. Der Mittelabschnitt des Federblattes kann beidseitig des Klemmbereiches im Wesentlichen gleich geformt sein. Dies schließt im Rahmen der Erfindung auch eine Variante mit ein, bei welcher der Hauptspannungsbereich zu einer Seite des Klemmbereichs aufgedickt ist, um die zum "S-Schlag" beschriebenen Probleme auszugleichen.

Im Rahmen der Erfindung ist eine Blattfeder für eine Radaufhängung vorgesehen, die wenigstens ein erfindungsgemäßes Federblatt aufweist. Die Blattfeder kann ein Federblatt oder mehrere, übereinander angeordnete, Federblätter aufweisen, wobei bei einer mehrblättrigen Blattfeder die Federblätter gleich und/oder unterschiedlich geformt und mehrere oder alle der Federblätter erfindungsgemäße Federblätter sein können.

Besonders bevorzugt ist eine Ausführungsform, bei der die Blattfeder eine Parabelfeder ist, wobei im Mittelabschnitt nur auf einer Seite des Klemmbereiches ein Hauptspannungsbereich oder auf beiden Seiten des Klemmbereiches jeweils ein Hauptspannungsbereich angeordnet ist. In einer weiteren, bevorzugten Ausführungsform ist die Blattfeder eine Lenkerfeder, wobei im Mittelabschnitt nur auf einer Seite des Klemmbereiches, insbesondere zwischen dem Klemmbereich und einem im Endabschnitt des Federblattes geformten Haltemittel, ein Hauptspannungsbereich angeordnet ist.

Weitere Einzelheiten, Merkmale und Vorteile der Erfindung ergeben sich aus der nachstehenden Beschreibung bevorzugter und den Schutzbereich nicht einschränkender Ausführungsformen der Erfindung unter Bezugnahme auf die angeschlossenen Zeichnungen.

Es zeigt:
- Fig. 1: eine Seitenansicht einer ersten Ausführungsform eines erfindungsgemäßen Federblattes für eine Parabelfeder,
- Fig. 2: eine Seitenansicht einer weiteren Ausführungsform eines erfindungsgemäßen Federblattes für eine Lenkerfeder,
- Fig. 3: eine Seitenansicht eines Ausschnittes einer erfindungsgemäßen Blattfeder aus Sicht auf eine Ebene III aus Fig. 4,
- Fig. 4: eine Draufsicht eines Ausschnittes einer erfindungsgemäßen Blattfeder aus Sicht auf eine Ebene IV aus Fig. 3,
- Fig. 5: eine Spannungsverteilung einer erfindungsgemäßen Blattfeder am Beispiel einer Hinterfeder und
- Fig. 6: eine Spannungsverteilung einer erfindungsgemäßen Blattfeder am Beispiel einer Vorderfeder.

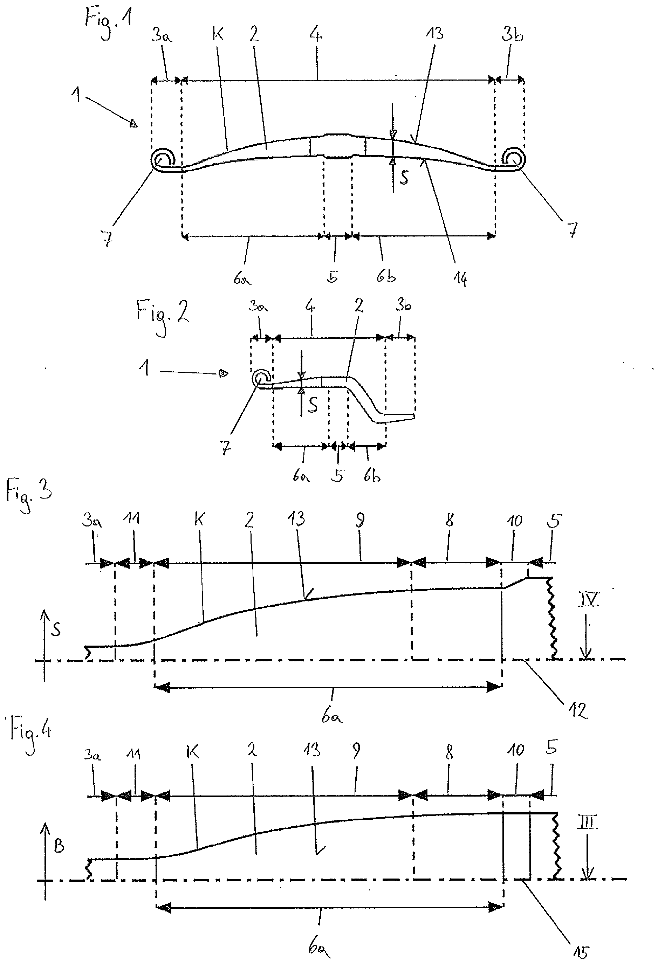

Fig. 1 zeigt eine Seitenansicht einer Blattfeder 1, welche in der dargestellten Ausführungsform eine Parabelfeder mit einem Federblatt 2 ist. Das Federblatt 2 weist zwei Endabschnitte 3a, 3b und einen dazwischen angeordneten Mittelabschnitt 4 auf. Der Mittelabschnitt 4 weist mittig einen Klemmbereich 5 auf, der eine größere Stärke S als die daran angrenzenden Abschnitte des Federblattes 2 aufweist. Die Stärke S bildet den Abstand zwischen der Federblattoberseite 13 zu der Federblattunterseite 14. Die Blattfeder 1 ist im Einbauzustand im Klemmbereich 5 mit einer Radachse verbunden.

Zwischen dem Klemmbereich 5 und den Endabschnitten 3a, 3b ist jeweils ein Hauptspannungsbereich 6a, 6b vorgesehen. Die Hauptspannungsbereiche 6a, 6b sind im Wesentlichen gleich geformt, wobei die Stärke S des Federblattes 2 in den Hauptspannungsbereichen 6a, 6b vom Klemmbereich 5 zum jeweils zugeordneten Endabschnitt 3a, 3b hin abnimmt. Bei einaxialer, vertikaler Belastung der Blattfeder 2 weist jeder Hauptspannungsbereich 6a, 6b eine im Wesentlichen gleichmäßige Spannungsverteilung auf, da die Stärke S und Breite B der Hauptspannungsbereiche 6a, 6b wie in Fig. 3 dargestellt in Richtung vom Klemmbereich 5 zum jeweiligen Endabschnitt 3a, 3b hin im Wesentlichen abnimmt.

Das Federblatt 2 weist in den Endabschnitten 3a, 3b jeweils ein Mittel 7 zum Verbinden des Federblattes 2 mit einem Fahrgestell bzw. mit Anbindungsteilen einer Radaufhängung auf, wobei das Mittel 7 als gerolltes Auge ausgeführt ist.

Fig. 2 zeigt eine Seitenansicht einer Blattfeder 1, welche in der dargestellten Ausführungsform eine Lenkerfeder mit einem Federblatt 2 ist. Das Federblatt 2 weist zwei Endabschnitte 3a, 3b und einen dazwischen angeordneten Mittelabschnitt 4 auf. Der Mittelabschnitt 4 weist mittig einen Klemmbereich 5 auf.

Das Federblatt 2 weist im Endabschnitt 3a ein Mittel 7 zum Verbinden des Federblattes 2 mit einem Fahrgestell bzw. mit Anbindungsteilen einer Radaufhängung auf, wobei das Mittel 7 als gerolltes Auge ausgeführt ist. Am gegenüberliegenden Endabschnitt 3b kann ein Luftfederbalg angeordnet werden.

Nur zwischen dem Klemmbereich 5 und dem das gerollte Auge aufweisenden Endabschnitt 3a ist ein Hauptspannungsbereich 6a vorgesehen, der bei einaxialer, vertikaler Belastung der Blattfeder 2 eine im Wesentlichen gleichmäßige Spannungsverteilung aufweist, da die Stärke S und Breite B der Hauptspannungsbereiche 6a, 6b wie in Fig. 3 dargestellt in Richtung vom Klemmbereich 5 zum jeweiligen Endabschnitt 3a, 3b hin im Wesentlichen abnimmt. Zwischen dem Klemmbereich und dem für einen Luftfederbalg vorgesehenen Endabschnitt 3b ist ein gegensinnig abgekröpfter Bereich vorgesehen.

In den Figs. 3 und 4 ist ein Ausschnitt des erfindungsgemäßen Federblattes 2 aus Fig. 1 oder Fig. 2 dargestellt. In Fig. 3 ist ein oberhalb einer fiktiven Trennlinie 12 angeordneter Teil des Federblattes 2 in einer Seitenansicht dargestellt. Fig. 3 zeigt den Verlauf der Stärke S. In Fig. 4 ist das Federblatt 2 seitlich einer Längsachse 15 des Federblatts 2 in einer Draufsicht dargestellt. Die Längsachse 15 kann eine Symmetrieachse sein. Fig. 4 zeigt den Verlauf der Breite B.

Der Ausschnitt zeigt einen Abschnitt des Klemmbereiches 5, den Hauptspannungsbereich 6a, der einen ersten Teilbereich 8 und einen daran anschließenden weiteren Teilbereich 9 aufweisen kann, und einen Abschnitt des Endabschnittes 3a. Der Verlauf der Federblattoberseite 13 ist bei den dargestellten Abschnitten des Klemmbereiches 5 und des Endabschnittes 3a im Wesentlichen gerade, wobei die Stärke S im Wesentlichen gleich bleibt. Die Stärke S kann in anderen Ausführungsformen auch zu- oder abnehmen. Im Hauptspannungsbereich 6a ist der Verlauf der Federblattoberseite 13 im Wesentlichen parabolisch, wobei die Stärke S in Richtung zum ersten Endabschnitt 3a hin abnimmt.

Zwischen dem Hauptspannungsbereich 6a und dem Klemmbereich 5 ist ein erster Übergangsbereich 10 und zwischen dem Hauptspannungsbereich 6a und dem Endabschnitt 3a ist ein weiterer Übergangsbereich 11 angeordnet. Die Übergangsbereiche 10 und 11 bilden jeweils einen Übergang zwischen dem geraden und dem parabolischen Verlauf der Federblattoberseite 13, wobei die Stärke S des Federblattes 2 im ersten Übergangsbereich 10 linear und im weiteren Übergangsbereich 11 nichtlinear abnimmt.

Die Breite B ist im Klemmbereich 5, im ersten Übergangsbereich 10, im weiteren Übergangsbereich 11 und im Endabschnitt 3a konstant. Insbesondere im Endabschnitt 3a kann die Breite B wieder zunehmen, so dass ein gegebenenfalls dort vorgesehenes Federauge an konstruktiv vorgegebene Maße einer Radaufhängung angepasst werden kann. Die zwischen der Längsachse 15 und einer Seitenkante K des Federblatts 2 verlaufende Breite B des Hauptspannungsbereiches 6a verläuft gemäß einer quadratischen Funktion. Die Seitenkante K verläuft im Wesentlichen entsprechend der Form eines Parabelarmes, wobei die Breite B in Richtung zum ersten Endabschnitt 3a hin abnimmt. Die Breite B kann im ersten Teilbereich 8 des Hauptspannungsbereiches 6a konstant sein und im weiteren Teilbereich 9 entsprechend der Form eines Parabelarmes abnehmen.

Zwischen dem Hauptspannungsbereich 6a und dem Endabschnitt 3a bzw. zwischen den Hauptspannungsbereichen 6a, 6b und dem entsprechenden Endabschnitt 3a, 3b können weitere Bereiche vorgesehen sein, deren Breite B und/oder Stärke S konstant oder variierend sein können.

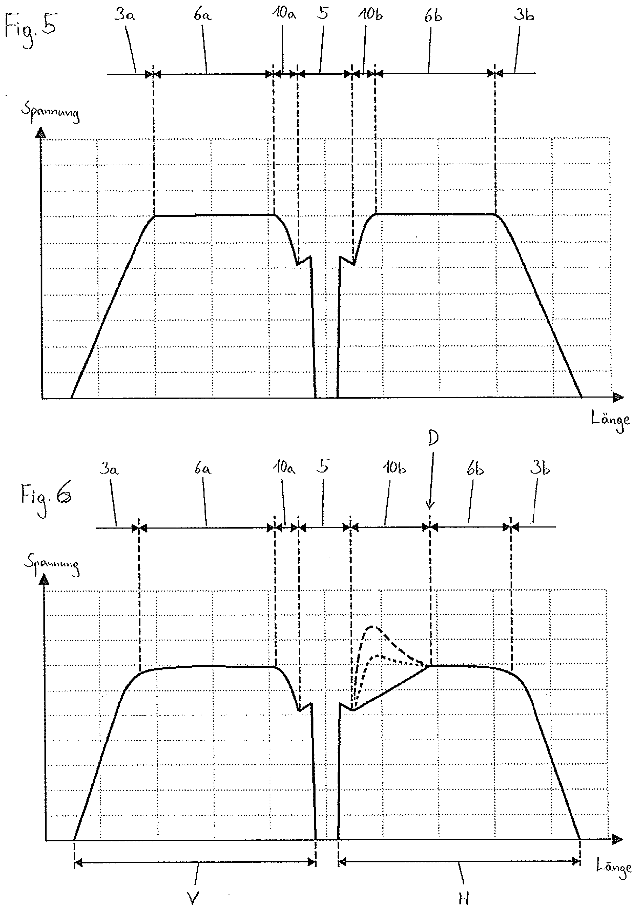

Fig. 5 zeigt die Spannungsverteilung einer Blattfeder 1 gemäß Fig. 1 am Beispiel einer Hinterfeder unter einaxialer, vertikaler Belastung, d.h. außerhalb eines Bremsvorganges. Es ist ersichtlich, dass die Spannung ausgehend vom Klemmbereich 5 in den ersten Übergangsbereichen 10a, 10b zunimmt. In den Hauptspannungsbereichen 6a, 6b ist die Spannungsverteilung konstant. In den Endbereichen 3a, 3b sowie in den weiteren Übergangsbereichen 11 nimmt die Spannung ab.

Fig. 6 dient zur Veranschaulichung der Spannungsverteilung am Beispiel einer Längsblattfeder als Vorderfeder mit einem aufgedickten Bereich. Die Vorderfeder ist im Klemmbereich 5 mit der Vorderachse eines Fahrzeuges verbunden. Der Bereich vor der Vorderachse wird als vorderer Bereich V bezeichnet und der Bereich hinter der Vorderachse als hinterer Bereich H. Bei zunehmender Belastung während eines Bremsvorganges übt die Blattfeder 1 einen sogenannten S-Schlag aus, wobei sich die Feder im vorderen Bereich V nach unten und im hinteren Bereich H nach oben biegt. Um den Ausschlag nach oben im hinteren Bereich H zu begrenzen, ist dort im Regelfall ein Dämpfer D am Fahrgestell angeordnet.

Die Spannungsverteilung im Hauptspannungsbereich 6b weist für den Bereich zwischen dem Klemmbereich 5 und dem Dämpfer D bei einem Bremsvorgang einen Ausschlag nach oben auf (Strichlinie). Um diesen Ausschlag entgegenzuwirken, wird der Hauptspannungsbereich 6b zwischen dem Klemmbereich 5 und dem Bereich, an dem das Federblatt 2 bei Verformung am Dämpfer D anschlägt, aufgedickt, so dass der Ausschlag weniger stark ausfällt (punktierte Linie). Durch diese Aufdickung verläuft die Spannungsverteilung bei einaxialer, vertiakler Belastung der Blattfeder 1, d.h. außerhalb eines Bremsvorganges, unterhalb des zu erzielenden konstanten Niveaus (durchgezogene Linie). Die erfindungsgemäßen Federblätter 2 gemäß den Fig. 1, 2 und insbesondere 3 sowie die Spannungsverteilung insbesondere gemäß Fig. 5 sind zur besseren Veranschaulichung nicht zwingend maßstabsgetreu und/oder richtig proportioniert dargestellt.

Zusammenfassend kann ein Ausführungsbeispiel der Erfindung wie folgt beschrieben werden:
Ein Federblatt für eine Blattfeder 1 weist eine Oberseite 13, eine Unterseite 14, zwei zwischen der Oberseite 13 und der Unterseite 14 verlaufende Seitenabschnitte, eine Längsachse 15, eine normal zur Oberseite 13 und Unterseite 14 und durch die Längsachse 15 verlaufende Schnittebene III, zwei Endabschnitte 3a, 3b und einen sich zwischen den Endabschnitten 3a, 3b erstreckenden Mittelabschnitt 4 auf. Der Mittelabschnitt 4 weist einen Klemmbereich 5 auf. Zwischen wenigstens einem der Endabschnitte 3a, 3b und dem Klemmbereich 5 ist ein Hauptspannungsbereich 6a, 6b vorgesehen, dessen Stärke S in Richtung vom Klemmbereich 5 zum Endabschnitt 3a, 3b abnimmt, insbesondere parabolisch abnimmt. Die zwischen der Schnittebene III und einem Seitenabschnitt des Federblatts 2 verlaufende Breite B des Hauptspannungsbereiches 6a, 6b nimmt über einen Teil seiner Länge oder über seine gesamte Länge in Richtung vom Endabschnitt 3a, 3b zum Klemmbereich 5 gemäß einer quadratischen Funktion zu.

## Patentansprüche

1. Federblatt für eine Blattfeder (1), wobei das Federblatt (2) eine Oberseite (13), eine Unterseite (14), zwei zwischen der Oberseite (13) und der Unterseite (14) verlaufende Seitenabschnitte, eine Längsachse (15), eine normal zur Oberseite (13) und Unterseite (14) und durch die Längsachse (15) verlaufende Schnittebene (III), zwei Endabschnitte (3a, 3b) und einen sich zwischen den Endabschnitten (3a, 3b) erstreckenden Mittelabschnitt (4) aufweist, wobei der Mittelabschnitt (4) einen Klemmbereich (5) aufweist und wobei zwischen wenigstens einem der Endabschnitte (3a, 3b) und dem Klemmbereich (5) ein Hauptspannungsbereich (6a, 6b) vorgesehen ist, dessen Stärke (S) in Richtung vom Klemmbereich (5) zum Endabschnitt (3a, 3b) parabolisch abnimmt, **dadurch gekennzeichnet, dass** zwischen dem Hauptspannungsbereich (6a, 6b) und dem Klemmbereich (5) ein Übergangsbereich (10) angeordnet ist, wobei die Stärke (S) des Federblatts (2) im Übergangsbereich (10) vom Klemmbereich (5) zum Hauptspannungsbereich (6a, 6b) bei konstanter Breite abnimmt, dass der Hauptspannungsbereich (6a, 6b) in Richtung vom Klemmbereich (5) zum Endabschnitt (3a, 3b) einen ersten Teilbereich (8) und einen weiteren Teilbereich (9) aufweist, wobei die Stärke (S) des ersten Teilbereichs (8) bei gleichbleibender Breite (B) abnimmt und die Stärke (S) des weiteren Teilbereichs (9) bei abnehmender Breite abnimmt, wobei die zwischen der Schnittebene (III) und den Seitenabschnitten des Federblatts (2) verlaufende Breite (B) des weiteren Teilbereiches (9) in Richtung vom Endabschnitt (3a, 3b) bis zum Klemmbereich (5) gemäß einer quadratischen Funktion zunimmt.

2. Federblatt nach Anspruch 1, **dadurch gekennzeichnet, dass** die zwischen der Schnittebene (III) und den Seitenkanten (K) des Federblatts (2) verlaufende Breite (B) des Hauptspannungsabschnittes (6a, 6b) gemäß einer quadratischen Funktion verläuft.

3. Federblatt nach Anspruch 1 oder 2, **dadurch gekennzeichnet, dass** die Seitenabschnitte und/oder die Seitenkanten (K) des Federblatts (2) im Hauptspannungsbereich (6a, 6b) im Wesentlichen entsprechend der Form eines Parabelarmes verlaufen.

4. Federblatt nach einem der Ansprüche 1 bis 3, **dadurch gekennzeichnet, dass** die Bereiche zu beiden Seiten der Schnittebene (III) symmetrisch zueinander sind.

5. Federblatt nach Anspruch 4, **dadurch gekennzeichnet, dass** die Breite (B) im weiteren Teilbereich (9) abschnittsweise linear abnimmt.

6. Federblatt nach einem der Ansprüche 1 bis 5, **dadurch gekennzeichnet, dass** zwischen dem Hauptspannungsbereich (6a, 6b) und dem Endabschnitt (3a, 3b) ein Übergangsbereich (11) angeordnet ist, wobei die Stärke (S) des Federblatts (2) im Übergangsbereich (11) vom Hauptspannungsbereich (6a, 6b) zum Endabschnitt (3a, 3b) abnimmt.

7. Federblatt nach Anspruch 6, **dadurch gekennzeichnet, dass** der Übergangsbereich (10) vom Klemmbereich (5) zum Hauptspannungsbereich (6a, 6b) und/oder der Übergangsbereich (11) vom Hauptspannungsbereich (6a, 6b) zum Endabschnitt (3a, 3b) nicht linear, insbesondere konkav, abnimmt.

8. Federblatt nach einem der Ansprüche 1 bis 7, **dadurch gekennzeichnet, dass** in Richtung vom Klemmbereich (5) zum Endabschnitt (3a, 3b) gesehen nach dem Hauptspannungsbereich (6a, 6b) die Breite (B) und/oder die Stärke (S) des daran angrenzenden Übergangsbereiches (11) oder Endabschnittes (3a, 3b) abnimmt, im Wesentlichen konstant bleibt oder zunimmt.

9. Federblatt nach einem der Ansprüche 1 bis 8, **dadurch gekennzeichnet, dass** das Federblatt (2) in wenigstens einem Endabschnitt (3a, 3b) ein Mittel (7) zum Verbinden des Federblattes (2) mit einem Fahrgestell bzw. mit Anbindungsteilen einer Radaufhängung, insbesondere ein gerolltes Federauge, aufweist.

10. Federblatt nach einem der Ansprüche 1 bis 9, **dadurch gekennzeichnet, dass** im Mittelabschnitt (4) beidseitig des Klemmbereiches (5) jeweils ein Hauptspannungsbereich (6a, 6b) angeordnet ist, insbesondere dass der Mittelabschnitt (4) des Federblattes (2) beidseitig des Klemmbereiches (5) im Wesentlichen symmetrisch zum Klemmbereich (5) geformt ist.

11. Federblatt nach einem der Ansprüche 1 bis 10, **dadurch gekennzeichnet, dass** die zwischen der Schnittebene (III) und den Seitenabschnitten des Federblattes (2) verlaufende Breite (B) des Hauptspannungsbereiches (6a, 6b) bezogen auf die Schnittebene (III) konvex verläuft.

12. Blattfeder für eine Radaufhängung, **dadurch gekennzeichnet, dass** die Blattfeder (1) wenigstens ein Federblatt (2) nach einem der Ansprüche 1 bis 11 aufweist.

13. Blattfeder nach Anspruch 12, **dadurch gekennzeichnet, dass** die Blattfeder (1) eine Parabelfeder oder eine Lenkerfeder ist.

## Claims

1. Spring leaf for a leaf spring (1), wherein the spring leaf (2) has an upper side (13), a lower side (14), two lateral sections extending between the upper side (13) and the lower side (14), a longitudinal axis (15), a section plane (III) extending perpendicularly to the upper side (13) and the lower side (14) and through the longitudinal axis (15), two end sections (3a, 3b), and a middle section (4) extending between the end sections (3a, 3b), wherein the middle section (4) has a clamping region (5) and wherein a main tension region (6a, 6b) is provided between at least one of the end sections (3a, 3b) and the clamping region (5), the thickness (S) of which decreases parabolically in the direction from the clamping region (5) to the end section (3a, 3b), **characterized in that** a transition region (10) is arranged between the main tension (6a, 6b) region and the clamping region (5), wherein the thickness (S) of the spring leaf (2) decreases in the transition region (10) from the clamping region (5) to the main tension region (6a, 6b) with uniform width, **in that** the main tension region (6a, 6b) has a first subregion (8) and a further subregion (9) in the direction from the clamping region (5) toward the end region (3a, 3b), wherein the thickness (S) of the first subregion (8) decreases with uniform width (B) and the thickness (S) of the further subregion (9) decreases with decreasing width , wherein the width (B) of the further subregion (9) extending between the section plane (III) and a lateral sections of the spring leaf (2) increases in the direction from the end section (3a, 3b) toward the clamping region (5) according to a quadratic function.

2. Spring leaf according to claim 1, **characterized in that** the width (B) of the main tensioning section (6a, 6b) extending between the section plane (III) and the lateral edges (K) of the spring leaf (2) extends according to a quadratic function.

3. Spring leaf according to claim 1 or 2, **characterized in that** the lateral sections and/or the lateral edges (K) of the spring leaf (2) in the main tension region (6a, 6b) extend essentially corresponding to the shape of a parabola arm.

4. Spring leaf according to any of the claims 1 to 3, **characterized in that** the regions on both sides of the section plane (III) are symmetrical to one another.

5. Spring leaf according to claim 4, **characterized in that** the width (B) sectionally decreases linearly in the further subregion (9) .

6. Spring leaf according to any of the claims 1 to 5, **characterized in that** a transition region (11) is arranged between the main tension region (6a, 6b) and the end section (3a, 3b), wherein the thickness (S) of the spring leaf (2) decreases in the transition region (11) from the main tension region (6a, 6b) to the end section (3a, 3b).

7. Spring leaf according to claim 6, **characterized in that** the transition region (10) from the clamping region (5) to the main tension region (6a, 6b) and/or the transition region (11) from the main tension region (6a, 6b) to the end section (3a, 3b) decreases nonlinearly, especially concave.

8. Spring leaf according to any of the claims 1 to 7, **characterized in that** after the main tension region (6a, 6b), viewed in the direction from the clamping region (5) to the end section (3a, 3b), the width (B) and/or the thickness (S) of the transition region (11) or end section (3a, 3b) adjoining thereon decreases, remains essentially constant or increases.

9. Spring leaf according to any of the claims 1 to 8, **characterized in that** the spring leaf (2) has a means (7) in at least one end section (3a, 3b) for connecting the spring leaf (2) to a chassis or to attachment parts of a wheel suspension respectively, especially a rolled spring eye.

10. Spring leaf according to any of the claims 1 to 9, **characterized in that** a main tension region (6a, 6b) is arranged in the middle section (4) on each of the two sides of the clamping region (5), especially that the middle section (4) of the spring leaf (2) is formed on the two sides of the clamping region (5) essentially symmetrically to the clamping region (5).

11. Spring leaf according to any of the claims 1 to 10, **characterized in that** the width (B) of the main tension region (6a, 6b) extending between the section plane (III) and the lateral sections of the spring leaf (2) extends convex with relation to the section plane (III).

12. Leaf spring for a wheel suspension, **characterized in that** the leaf spring (1) has at least one spring leaf (2) according to any of the claims 1 to 11.

13. Leaf spring according to claim 12, **characterized in that** the leaf spring (1) is a parabolic spring or a trailing suspension arm spring.

## Revendications

1. Lame de ressort pour un ressort à lames (1), laquelle lame de ressort (2) présente une face supérieure (13), une face inférieure (14), deux parties latérales courant entre la face supérieure (13) et la face inférieure (14), un axe longitudinal (15), un plan de coupe (III) perpendiculaire à la face supérieure (13) et à la face inférieure (14) et passant par l'axe longitudinal (15), deux parties d'extrémité (3a, 3b) et une partie médiane (4) qui s'étend entre les parties d'extrémité (3a, 3b), la partie médiane (4) présentant une zone de serrage (5) et une zone de tension principale (6a, 6b), dont l'épaisseur (S) diminue de façon parabolique de la zone de serrage (5) vers la partie d'extrémité (3a, 3b), étant prévue entre au moins une des parties d'extrémité (3a, 3b) et la zone de serrage (5), **caractérisée en ce qu'**une zone de transition (10) est disposée entre la zone de tension principale (6a, 6b) et la zone de serrage (5), l'épaisseur (S) de la lame de ressort (2) dans la zone de transition (10) de la zone de serrage (5) vers la zone de tension principale (6a, 6b) diminuant sur une largeur constante, **en ce que** la zone de tension principale (6a, 6b) présente, de la zone de serrage (5) à la partie d'extrémité (3a, 3b), une première partie de zone (8) et une deuxième partie de zone (9), l'épaisseur (S) de la première partie de zone (8) diminuant sur une largeur (B) constante et l'épaisseur (S) de la deuxième partie de zone (9) diminuant sur une largeur décroissante, la largeur (B) de la deuxième partie de zone (9) augmentant en direction de la partie d'extrémité (3a, 3b) jusqu'à la zone de serrage (5) suivant une fonction quadratique entre le plan de coupe (III) et les parties latérales de la lame de ressort (2).

2. Lame de ressort selon la revendication 1, **caractérisée en ce que** la largeur (B) de la zone de tension principale (6a, 6b) entre le plan de coupe (III) et les arêtes latérales (K) de la lame de ressort (2) évolue suivant une fonction quadratique.

3. Lame de ressort selon la revendication 1 ou 2, **caractérisée en ce que** les parties latérales et/ou les arêtes latérales (K) de la lame de ressort (2) dans la zone de tension principale (6a, 6b) suivent sensiblement la forme d'un bras parabolique.

4. Lame de ressort selon l'une des revendications 1 à 3, **caractérisée en ce que** les zones situées de part et d'autre du plan de coupe (III) sont symétriques l'une de l'autre.

5. Lame de ressort selon la revendication 4, **caractérisée en ce que** la largeur (B) diminue par zones de façon linéaire dans l'autre partie de zone (9) .

6. Lame de ressort selon l'une des revendications 1 à 5, **caractérisée en ce qu'**une zone de transition (11) est disposée entre la zone de tension principale (6a, 6b) et la partie d'extrémité (3a, 3b), l'épaisseur (S) de la lame de ressort (2) dans la zone de transition (11) diminuant de la zone de tension principale (6a, 6b) vers la partie d'extrémité (3a, 3b).

7. Lame de ressort selon la revendication 6, **caractérisée en ce que** la zone de transition (10) diminue de la zone de serrage (5) vers la zone de tension principale (6a, 6b) et/ou la zone de transition (11) diminue de la zone de tension principale (6a, 6b) vers la partie d'extrémité (3a, 3b) de façon non linéaire, en particulier concave.

8. Lame de ressort selon l'une des revendications 1 à 7, **caractérisée en ce que**, vues dans la direction de la zone de serrage (5) vers la partie d'extrémité (3a, 3b), la largeur (B) et/ou l'épaisseur (S) de la zone de transition (11) ou de la partie d'extrémité (3a, 3b) limitrophe de la zone de tension principale (6a, 6b) diminuent, restent sensiblement constantes ou augmentent après celle-ci.

9. Lame de ressort selon l'une des revendications 1 à 8, **caractérisée en ce que** la lame de ressort (2) présente dans au moins une partie d'extrémité (3a, 3b) un moyen (7) pour relier la lame de ressort (2) à un train de roulement ou à des parties de liaison d'une suspension de roue, en particulier un œillet de ressort enroulé.

10. Lame de ressort selon l'une des revendications 1 à 9, **caractérisée en ce qu'**une zone de tension principale (6a, 6b) est disposée dans la partie médiane (4) de chaque côté de la zone de serrage (5), et en particulier **en ce que** la partie médiane (4) de la lame de ressort (2) a une forme sensiblement symétrique par rapport à la zone de serrage (5) de part et d'autre de la zone de serrage (5).

11. Lame de ressort selon l'une des revendications 1 à 10, **caractérisée en ce que** la largeur (B) de la zone de tension principale (6a, 6b) entre le plan de coupe (III) et les parties latérales de la lame de ressort (2) suit un tracé convexe par rapport au plan de coupe (III).

12. Ressort à lames pour une suspension de roue, **caractérisé en ce que** le ressort à lames (1) comporte au moins une lame de ressort (2) selon l'une des revendications 1 à 11.

13. Ressort à lames selon la revendication 12, **caractérisée en ce que** le ressort à lames (1) est un ressort parabolique ou un ressort de bras oscillant.
